Europäisches Patentamt

European Patent Office

Office européen des brevets

(19)

(11) Veröffentlichungsnummer: **0 210 511 B1**

## EUROPÄISCHE PATENTSCHRIFT

(12)

(45) Veröffentlichungstag der Patentschrift: **20.03.91**

(51) Int. Cl.⁵: **C08G 69/28**

(21) Anmeldenummer: **86109583.4**

(22) Anmeldetag: **12.07.86**

(54) Verfahren zur Herstellung von Poly(tetramethylenadipamid).

(30) Priorität: **27.07.85 DE 3526931**

(43) Veröffentlichungstag der Anmeldung:
**04.02.87 Patentblatt 87/06**

(45) Bekanntmachung des Hinweises auf die
Patenterteilung:
**20.03.91 Patentblatt 91/12**

(84) Benannte Vertragsstaaten:
**DE FR GB IT NL**

(56) Entgegenhaltungen:
**EP-A- 0 039 524**
**EP-A- 0 129 195**
**EP-A- 0 160 337**

(73) Patentinhaber: **BAYER AG**

**W-5090 Leverkusen 1 Bayerwerk(DE)**

(72) Erfinder: **Nielinger, Werner, Dr.**
**Bärenstrasse 21**
**W-4150 Krefeld(DE)**
Erfinder: **Brinkmeyer, Hermann, Dr.**
**Bodelschwinghstrasse 12**
**W-4150 Krefeld(DE)**
Erfinder: **Binsack, Rudolf, Dr.**
**Bethelstrasse 4a**
**W-4150 Krefeld(DE)**
Erfinder: **Bottenbruch, Ludwig, Dr.**
**Wöhlerstrasse 5**
**W-4150 Krefeld(DE)**
Erfinder: **Füllmann, Heinz-Josef, Dr.**
**Am Schneeberg 31**
**W-5653 Leichlingen 2(DE)**

EP 0 210 511 B1

## Beschreibung

Gegenstand der Erfindung ist ein verfahren zur Herstellung von Poly(tetramethylenadipamid) durch Erhitzen des Salzes aus 1,4-Diaminobutan und Adipinsäure auf 280 - 320°C bei weniger als 8 bar und Weiterkondensation des Vorkondensats in der festen Phase.

Die Herstellung von Polyamiden aus 1,4-Diaminobutan und Adipinsäure ist mit beträchtlichen Schwierigkeiten verbunden. So erhält man gemäß J. Polym. Sci, Pol. Chem. 15 539 (1977) bei der Vorkondensation von 1,4-Diaminobutan und Adipinsäure bei 20 - 40 bar ein farbloses Vorkondensat, das sich jedoch bei der Weiterkondensation im Vakuum bei 290°C verfärbt.

Die europäische Patentschrift 39 524 lehrt eine Verbesserung des Verfahrens. Die Vorkondensation wird bei einer Temperatur von höchstens 220°C durchgeführt. Dabei wird die Schmelze durch einen Wasserdampfdruck von 20 - 25 bar im flüssigen Zustand gehalten. Ein Abweichen von den vorgegebenen Bedingungen, insbesondere der Kondensation über 220°C, führt zu verfärbten Produkten und zu einer verstärkten Bildung von Pyrrolidin-Endgruppen aus 1,4-Diaminobutan, die die Nachkondensation stören. Auch die Nachkondensation dieser Vorkondensate muß in Gegenwart von Wasserdampf durchgeführt werden, um helle Endprodukte zu erhalten.

Es wurde nun gefunden, daß man auf einfache Art und Weise kaum gefärbte Polyamide erhält, wenn man die Vorkondensation kontinuierlich bei Temperaturen zwischen 280 und 320°C bei nur wenig erhöhtem Druck durchführt, wobei die Reaktionszeit 30 min nicht überschreiten soll. Dabei erhält man Vorkondensate mit weniger als 0,1 Gew.-% Pyrrolidin-Endgruppen gegenüber mehr als 0,13 Gew.-% nach den bekannten Verfahren. Sie können weiterhin ohne Zusatz von Wasserdampf zu farbhellen Polyamiden nachkondensiert werden. Aber auch diskontinuierlich sind in kleinem Maßstab bei Atmosphärendruck durch Erhitzen auf 220°C (Badtemperatur) und anschließend auf 300°C Vorkondensate herstellbar, die bereits bei 180 - 220°C im Stickstoffstrom ohne Zusatz von Wasserdampf zu beinahe farblosen Polyamiden nachkondensiert werden können.

Gegenstand der Erfindung ist daher ein Verfahren zur Herstellung von Polyamiden aus 1,4-Diaminobutan und Adipinsäure, durch Kondensation des Salzes und Nach Kondensation indem man eine 40 - 70 %ige wäßrige Lösung des Salzes aus 1,4-Diaminobutan und Adipinsäure auf 280 - 320°C, vorzugsweise 290 - 310°C, in Kontinuierlicher Verfahreusweise für die Dauer von 5 - 30 min und bei einem Druck von weniger als 8 bar, vorzugsweise 1 - 5 bar erhitzt und das Vorkondensat mit einer Viskosität von 1,05 - 2,0, vorzugsweise von 1,1 - 1,5, anschließend in der festen Phase, vorzugsweise im Stickstoffstrom ohne Zusatz von Wasserdampf bei 180 - 260°C, vorzugsweise 200 - 250°C , ohne Zusatz von Wasserdapf bei Atmosphärendruck nachkondensiert.

Zur Herstellung des Vorkondensats ist beispielsweise eine Vorrichtung, wie sie in der britischen Patentschrift 924 630 beschrieben ist, geeignet.

Das Verfahren wird kontinuierlich durchgeführt.

Neben 1,4-Diaminobutan und Adipinsäure können auch andere Monomere in Mengen bis zu 20 Mol-%, vorzugsweise bis zu 10 Mol-%, bezogen auf das Diamin oder die Dicarbonsäure, mit eingesetzt werden. Geeignete Comonomere sind ω-Aminocarbonsäuren, wie ε-Aminocapronsäure, ω-Aminoundecansäure oder ω-Aminolaurinsäure, ferner Dicarbonsäuren, wie Azelainsäure, Sebazinsäure, Dekandicarbonsäure, Cyclohexandicarbonsäure, Terephthalsäure, Isophthalsäure, und Diamine, wie Hexamethylendiamin, Trimethylhexamethylendiamin, Bis-(4-aminocyclohexyl)-methan, 3,3'-Dimethyl-4,4'-diaminodicyclohexylmethan, Xylylendiamin. Die Comonomeren können einzeln oder in Kombination zugesetzt werden, sofern weitgehend Äquivalenz der funktionellen Gruppen gegeben ist.

Diamine und Dicarbonsäuren sollen nämlich grundsätzlich in äquivalenten Mengen eingesetzt werden. Es empfiehlt sich jedoch, 1,4-Diaminobutan mit einem Überschuß von 0,1 bis 10 Mol-%, vorzugsweise 1 bis 8 Mol-%, zu verwenden, um Verluste, die bei der Vorkondensation auftreten, zu kompensieren.

Den nach dem erfindungsgemäßen Verfahren hergestellten Produkten können nach der Vorkondensation oder nach der weiteren Kondensation in der Festphase die üblichen Zusätze und Hilfsmittel, wie Gleit- und Entformungsmittel, Nukleierungsmittel und Stabilisatoren zugesetzt werden, ferner Brandschutzmittel und Füllstoffe, insbesondere Glasfasern in Mengen von 10 - 60 Gew.-%, bezogen auf die gesamte Mischung. Als weitere Füll- und Verstärkungsstoffe kommen Mikroglaskugeln, Kreide, Quarze, wie Novaculit, und Silikate, wie Asbest, Feldspat, Glimmer, Talkum, Wollastonit sowie Kaolin in calcinierter und nicht calcinierter Form in Betracht. Außerdem sind Farbstoffe und Pigmente, insbesondere Farbruße und/oder Nigrosinbasen zu nennen, ferner Schlagzähmodifikatoren, beispielsweise auf der Basis von Copolymerisaten des Ethylens, gepfropften Polybutadienen und Poly(meth)acrylaten.

Die Polyamide lassen sich auf handelsüblichen Spritzgußmaschinen oder Extrudern verarbeiten. Man kann daraus Formkörper, wie Spritzgußteile oder Platten, für den Maschinenbau, für technische Geräte, den

EP 0 210 511 B1

Automobilbau und den Elektrosektor herstellen. Formteile aus den erfindungsgemäßen Polyamiden können insbesondere mit Vorteil dort eingesetzt werden, wo eine höhere Wärmeformbeständigkeit verlangt wird.

Beispiel 1

Man pumpt eine 60 %ige wäßrige Salzlösung von 1,4-Diaminobutan und Adipinsäure, die 5 Mol-% 1,4-Diaminobutan im Überschuß enthält, aus einer auf 80°C beheizten Vorlage durch eine auf 300°C ölbeheizte Rohrschlange von 4 m Länge und einem Durchmesser von 4 mm. Der Durchsatz beträgt 8 ml Salzlösung/min. Am Ende des Rohres befindet sich ein Hofer-Ventil, das so einreguliert wird, daß am Ende des Rohres ein Druck von 1,5 bar gemessen wird. Die austretende Schmelze wird in Wasser aufgefangen und abgekühlt. Das farblose Vorkondensat hat eine relative Viskosität von 1,22, gemessen an einer 1 %igen Lösung in m-Kresol bei 25°C in einem Ubbelohde-Viskosimeter.

$$\begin{array}{lll} \text{Endgruppen:} & NH_2 & 0,112 \ \text{Gew.-\%} \\ & COOH & 1,96 \ \text{Gew.-\%} \\ \text{Pyrrolidin-Gehalt:} & & - \ 0,06 \ \text{Gew.-\%} \end{array}$$

Die Bestimmung des Pyrrolidin-Gehaltes erfolgte gemäß der europäischen Patentmeldung 38 094.

Das Vorkondensat wurde 24 Std. bei 250°C in einem Stickstoffstrom nachkondensiert. Das nachkondensierte Produkt ist schwach gelb gefärbt; es hat eine relative Viskosität von 3,86, gemessen wie oben angegeben.

Beispiel 2

Beispiel 1 wird wiederholt; jedoch ist die Rohrschlange bei diesem Versuch von 4 m auf 6 m verlängert. Der im Rohr sich einstellende Druck beträgt 2,5 bar.

Man erhält ein Vorkondensat mit einer relativen Viskosität von 1,17, welches in 17 Std. bei 250°C im Stickstoffstrom zu einem Polyamid mit einer relativen Viskosität von 2,8 nachkondensiert wurde.

**Ansprüche**

1. Verfahren zur Herstellung von Polyamiden, welche geringe Mengen an Pyrrolidin-Endgruppen aufweisen, aus l,4-Diaminobutan und Adipinsäure in Form wäßriger Salzlösungen, durch Vorkondensation in der Schmelze zu einem Vorkondensat und Nachkondensation in der festen Phase, wobei eine 40 bis 70 gew.-%ige wäßrige Lösung der Monomeren auf 280-320°C für die Dauer von 5 bis maximal 30 min. und bei einem Druck von < 8 bar durch kontinuierliche Förderung in einem beheizten Reaktionsrohr, das an jeder Stelle auf die gleiche Temperatur beheizt wird, zu einem Vorkondensat mit einer relativen Viskosität von 1,05 bis 2,0, gemessen an einer 1 gew.-%igen Lösung bei 25°C in m-Kresol, erhitzt und in der festen Phase bei 180-260°C ohne Zusatz von Wasserdampf bei Atmosphärendruck nachkondensiert wird.

2. Verfahren nach Ansprüchen 1 bis 3, **dadurch gekenneichnet,** daß man die Varkondensation unter wasserdampf durchführt.

3. Verfahren nach Ansprüchen 1 und 2, **dadurch gekennzeichnet,** daß die Vorkondensation bei Temperaturen van 290 bis 310°C und bei Drucken von 1 bis 5 bar und die Nachkondensation im Stickstaffstrom bei 200 bis 250°C durchgeführt wird.

4. Verfahren nach Ansprüchen 1 bis 3 **dadurch gekennzeichnet,** daß bis zu 20 Mol-% weiterer amidbildender Monomere mitverwendet werden.

3

## Claims

1. A process for the preparation of polyamides containing small quantities of pyrrolidine end groups from 1,4-diaminobutane and adipic acid in the form of aqueous salt solutions by solvent-free precondensation to form a precondensate and after-condensation in the solid phase, in which a 40 to 70% by weight aqueous solution of the monomers is heated to 280-320°C for from 5 to a maximum of 30 minutes and at a pressure of <8 bar by continuous passage through a heated reaction tube which is heated to the same temperature at every point to form a precondensate having a relative viscosity of from 1.05 to 2.0, determined on a 1% by weight solution at 25°C in m-cresol, and after-condensation is carried out in the solid phase at 180-260°C and at atmospheric pressure without the addition of steam.

2. A process according to Claims 1 to 3, characterised in that the precondensation is carried out with steam.

3. A process according to Claims 1 and 2, characterised in that the precondensation is carried out at temperatures from 290 to 310°C and at pressures from 1 to 5 bar and after-condensation is carried out in a stream of nitrogen at 200 to 250°C.

4. A process according to Claims 1 to 3, characterised in that up to 20 mol-% of other amide forming monomers are also used.


## Revendications

1. Procédé de production de polyamides, qui présentent de faibles quantités de groupes pyrrolidine terminaux, à partir de l,4-diaminobutane et d'acide adipique sous forme de solutions aqueuses de sels, par précondensation à l'état fondu en un précondensat et postcondensation en phase solide, dans lequel une solution aqueuse à 40-70% en poids des monomères est chauffée à 280-320°C pendant une durée allant de 5 minutes à un maximum de 30 minutes et à une pression inférieure à 8 bars par circulation continue dans un tube de réaction qui est chauffé en chaque point à la même température, pour former un précondensat ayant une viscosité relative de 1,05 à 2,0, mesurée sur une solution a 1% en poids dans le m-crésol à 25°C, et est post-condensée en phase solide à 180-260°C à la pression atmosphérique, sans addition de vapeur d'eau.

2. Procédé suivant les revendications 1 à 3, caractérisé en ce qu'on effectue la précondensation en présence de vapeur d'eau.

3. Procédé suivant les revendications 1 et 2, caractérisé en ce que la précondensation est conduite à des températures de 290 à 3l0°C et à des pressions de 1 à 5 bars et la post-condensation est conduite sous courant d'azote à une température de 200 à 250°C.

4. Procédé suivant les revendications 1 à 3, caractérisé en ce qu'on utilise simultanément jusqu'à 20 moles % d'autres monomères formant un amide.